# EUROPÄISCHE PATENTANMELDUNG

(11) **EP 1 093 708 A1**
(43) Veröffentlichungstag der Anmeldung: **25.04.2001**
(21) Anmeldenummer: 00121527.6
(22) Anmeldetag: 30.09.2000
(51) Int. Cl.: A01D 43/10

(54) **Mähgerät**

(30) Priorität: 21.10.1999 DE 19950748
(71) Anmelder: DEERE & COMPANY, Moline, Illinois 61265-8098 (US)
(72) Erfinder: Smith, Larry N., Ottumwa, IA 52501 (US); Boucher, Jean Francois, 70100 Gray (FR); Franet, Roger, 57200 Sarreguemines (FR); Mentzer, Matthew, Ottumwa, IA 52501 (US)
(74) Vertreter: Magin, Ludwig Bernhard

(57) **Zusammenfassung**

Mähgeräte zum Mähen von Gras weisen oft hinter einer Mähvorrichtung eine Mähgutbearbeitungsvorrichtung auf, um das gemähte Gut so zu behandeln, daß es schneller trocknet. Es wurden bereits umfangreiche Anstrengungen unternommen, um das so bearbeitete Gut zur Mitte der Mähvorrichtung seitlich versetzt abzulegen.

Es wird ein Mähgerät (10) vorgeschlagen, dessen Mähgutbearbeitungsvorrichtung (14) gegenüber der Mähvorrichtung (12) quer zur Fahrtrichtung verschoben werden kann.

Derartige Mähgeräte (10) werden in der Landwirtschaft eingesetzt.

## Beschreibung

Die Erfindung betrifft ein Mähgerät mit einer Mähvorrichtung und einer Mähgutbehandlungsvorrichtung.

Mähgeräte für Halmgut wie Gras sind in der Form von Mähschlagzettern oder Mähknickzettern bekannt, wobei an einer Vorderseite ein Mähbalken mit einem oszillierenden Messer oder mit Mähscheiben und dahinter eine Mähgutbehandlungsvorrichtung mit einem Zinkenrotor oder mit Knickrollen vorgesehen sind. Die Ausrichtung beider Vorrichtungen erfolgt im wesentlichen symmetrisch zu einer Längsmittenachse des Mähgeräts, so daß ein Schwad ungefähr mittig hinter dem Mähgerät gebildet wird.

Allerdings ist es auch bereits bekannt, eine Mähgutbehandlungsvorrichtung mit seitlichem Versatz zu der Mähvorrichtung fest an dem Mähgerät anzubringen. Auf diese Weise bietet sich beim nachfolgenden Schnitt einem Fahrzeug eine breitere Spur.

Außerdem offenbart die DE-A1-44 22 502 ein Mähgerät mit einer zweiten Erntegutbehandlungsvorrichtung, die das behandelte Erntegut seitlich versetzt ablegt.

Das der Erfindung zugrunde liegende Problem wird darin gesehen, daß der Aufwand für eine zweite Mähgutbehandlungsvorrichtung zum Erreichen eines seitlichen Versatzes beträchtlich ist und daß die Verwendung einer gegenüber der Mähvorrichtung seitlich versetzt angebauten Mähgutbehandlungsvorrichtung die vielseitige Verwendbarkeit eines solchen Mähgeräts einschränkt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann die Mähgutbehandlungsvorrichtung in verschiedene Stellungen mit Bezug auf die Fahrtrichtung gebracht werden, wodurch eine nach links oder rechts versetzte oder eine mittige Ablage des Mähguts erreicht werden kann. Überdies kann die Mähgutbehandlungsvorrichtung auch für den Straßentransport in eine Stellung innerhalb der zulässigen Straßentransportbreite gebracht werden.

Eine Mähgutbehandlungsvorrichtung mit einer gegenüber der Mähvorrichtung geringeren Aufnahmeweite kann innerhalb bestimmter Grenzen gegenüber der Mähvorrichtung bewegt werden, ohne deren Außenkanten zu überschreiten.

Um stets einen störungsfreien Gutfluß an der Schnittstelle von Mähvorrichtung und Mähgutbehandlungsvorrichtung zu erzielen, sowie die geometrische Beziehung zwischen den Seitenwänden der Mähgutbehandlungsvorrichtung aufrechtzuerhalten, ist vorgesehen, daß die Mähvorrichtung in einem Gehäuse mit einer eine Abgabeöffnung aufweisenden Rückwand aufgenommen und die Mähgutbehandlungsvorrichtung in einem Gehäuse mit einer Vorderwand gelagert ist, die sich mit der Rückwand seitlich der Abgabeöffnung und das Mähgut durch eine eigene Aufnahmeöffnung annimmt.

Der Antrieb einer beweglichen Mähgutbehandlungsvorrichtung kann grundsätzlich mittels eines Hydraulikmotors, eines Winkel- oder Zugmittelgetriebes erfolgen, die sich der jeweiligen Stellung der Mähgutbehandlungsvorrichtung anpassen. Eine technisch einfache Lösung mit geringem Wirkungsgradverlust ist jedenfalls in der Verwendung einer Teleskopwelle zu sehen, die auf die jeweils erforderliche Länge gebracht wird. Alternativ hierzu könnte auch ein Hydraulikmotor verwendet werden, der direkt auf die Welle 74 aufgesetzt oder mit dieser verbunden wird.

Eine Verstellung, insbesondere Verschiebung, der Mähgutbehandlungsvorrichtung quer zur Fahrtrichtung mittels eines Stellmotors oder allgemein mittels eines Betätigungsglieds hat den Vorteil, daß dies von einem Fahrzeug aus und während des Betriebs durchgeführt werden kann.

Zur Unterstützung und/oder Erhöhung der seitlich versetzten Ablagemöglichkeit kann eine insbesondere aus Leitblechen bestehende Leitvorrichtung verwendet werden, die seitlich verstellbar, z. B. verschwenkbar ist. Wenn die Leitbleche an der Mähgutbehandlungsvorrichtung angebracht sind, behalten sie auch bei deren Verstellung die relative Lage zu ihr bei und bedürfen keiner Nachführung.

Die Verwendung mehrerer Stellmotoren macht es möglich, den seitlichen Versatz des Schwads gegenüber der Mähvorrichtung unabhängig von einer Verstellung der Mähgutbehandlungsvorrichtung zu erhöhen oder zu verringern.

Mittels einer Steuerung oder Regelung, die je nach Betriebszustand, z. B. Gruppierung von Schwaden, Einzelablage, manuell oder sensorgesteuert eine seitliche oder mittige Ablage des Mähguts bewirkt, kann ein optimaler Einsatz des Mähgeräts erreicht werden.

Wenn die Mähvorrichtung einen Mähbalken mit mehreren Mähscheiben enthält, deren Drehrichtung zur Mitte des Gutflusses ausgerichtet sind, wird unabhängig von der Stellung der Mähgutbearbeitungsvorrichtung das Mähgut stets in deren mittigen oder mittenahen Aufnahmebereich eingespeist.

Eine tragende Verbindung zwischen der Mähgutbearbeitungsvorrichtung und der Mähvorrichtung bewirkt, daß die relative Stellung beider zueinander auch bei rauhem Betrieb auf dem Feld erhalten bleibt und beim Vorhandensein einer federnden Aufhängung diese für beide gemeinsam genutzt werden kann.

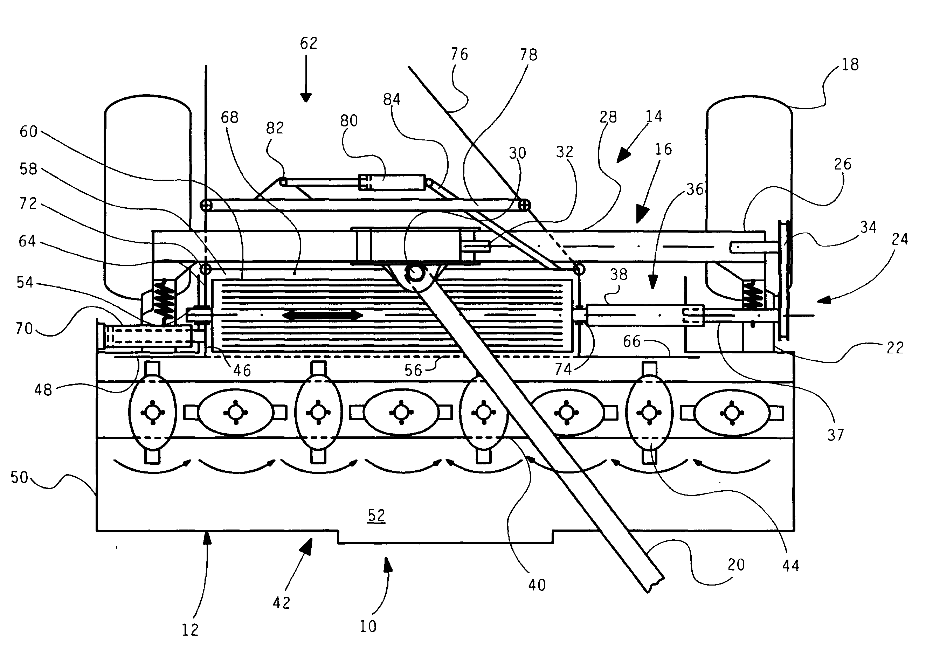

In der Zeichnung ist in einer einzigen Figur ein nachfolgend näher beschriebenes Ausführungsbeispiel der Erfindung dargestellt.

Die einzige Figur zeigt in Draufsicht und schematischer Darstellung ein Mähgerät 10 mit einer Mähvorrichtung 12 und einer Mähgutbehandlungsvorrichtung 14.

Das Mähgerät 10 ist in diesem Beispiel als ein sogenannter Mähaufbereiter in gezogener Ausführung dargestellt, der unter anderem einen Rahmen 16, Räder 18, eine Deichsel 20, eine federnde Aufhängung 22 und einen Antrieb 24 aufweist.

Das Mähgerät 10 dient dem Mähen von Erntegut, z. B. Gras, und dem anschließenden Bearbeiten, so daß dieses gemähte Erntegut schneller trocknet. Die Arbeitsbreite des Mähgeräts beträgt üblicherweise 3 bis 4,5 m. Das von ihr gemähte Erntegut wird am rückwärtigen Ende in einem Schwad abgelegt, das wesentlich schmäler ist als die Arbeitsbreite. Das Mähgerät 10 kann als Scheibenmäher, Trommelmäher, Balkenmäher oder dergleichen ausgebildet sein.

Der Rahmen 16 ist im wesentlichen in der Form einer Brücke bzw. eines auf dem Kopf stehenden 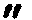 U" ausgebildet. Seitlich sich nach unten erstreckende Schenkel 26 nehmen die Räder 18 drehbar auf. Ein die Schenkel 26 verbindender Träger 28 enthält im Bereich seiner Mitte ein Lager 30 für die Deichsel 20.

Die Räder 18 sind so angeordnet, daß sie sich in der Fahrtrichtung gesehen innerhalb der Außengrenzen der Mähvorrichtung 12 befinden.

Die Deichsel 20 erstreckt sich von dem Lager 30 ausgehend über die Mähvorrichtung 12 und die Mähgutbehandlungsvorrichtung 14 hinweg weit nach vorne und dient dem Anschluß an ein nicht gezeigtes Zugfahrzeug, insbesondere an einen Ackerschlepper. Die Deichsel 20 enthält eine nicht gezeigte Antriebswelle, die von dem Zugfahrzeug zu dem Antrieb 24 führt. Die Verbindung zwischen dem Lager 30 und der Deichsel 20 ist so ausgebildet, daß die Deichsel 20 über einen Bereich von nahezu 180 Grad geschwenkt werden kann. Daraus ergibt sich, daß das Mähgerät 10 in Stellungen mit nahezu beliebigem seitlichen Versatz gegenüber der Längsmittenachse des Zugfahrzeugs gezogen werden kann. In davon abweichenden Ausführungsbeispielen kann die Deichsel selbstverständlich auch außerhalb der Mitte des Rahmens 16 angeschlossen werden.

Die Aufhängung 22 ist von herkömmlicher Bauart und enthält mehrere nicht gezeigte Federn und Lenker, die die Mähvorrichtung 12 mit der Mähgutbehandlungsvorrichtung 14 vertikal relativ beweglich an den Rahmen 16 anschließen. Mittels der Aufhängung 22 kann die aus der Mähvorrichtung 12 und der Mähgutbehandlungsvorrichtung 14 bestehende Einheit in ihrem Abstand gegenüber dem Boden verstellt und in ihrer jeweiligen Lage gegen Stöße abgefedert werden.

Der Antrieb 24 ist ebenfalls zum Teil herkömmlich ausgebildet und enthält jeweils nicht dargestellt eine Antriebswelle von dem Zugfahrzeug, ein Winkelgetriebe von dem Ende der Antriebswelle, eine Welle 32 von dem Winkelgetriebe zu einem Zugmittelgetriebe 34 und eine teleskopische Welle 36, deren fester und äußerer Wellenteil 37 mit dem Zugmittelgetriebe 34 und deren innerer axial beweglicher Wellenteil 38 zu der Mähgutbehandlungsvorrichtung 14 führt.

Die Mähvorrichtung 12 enthält einen Mähbalken 40 und ein Gehäuse 42 und ist an der Vorderseite des Mähgeräts 10 angeordnet.

Der Mähbalken 40 enthält in diesem speziellen Ausführungsbeispiel eine Vielzahl, nämlich acht, nebeneinander angeordneter drehend antreibbarer Mähscheiben 44, die jeweils zu der Längsmitte des Mähgeräts 10 hin rotieren und gemeinsam die Arbeitsbreite des Mähgeräts 10 bestimmen. In einer optimalen Betrachtung erfolgt die Weitergabe des Mähguts nach dem Schneidvorgang zwischen den beiden mittleren Mähscheiben 44 nach hinten, da alle Mähscheiben 44 das Mähgut nach innen transportieren, gegebenenfalls mit aufgesetzten Fördermitteln.

Das Gehäuse 42 setzt sich aus Seitenwänden 46, einer Rückwand 48, Halmteilern 50 und einer Decke 52 zusammen, die miteinander verschraubt, verschweißt, vernietet oder sonstwie zusammengefügt sind, um ein im wesentlichen einteiliges Gehäuse 42 zu bilden.

Die Seitenwände 46 erstrecken sich vertikal und in der Fahrtrichtung zwischen der Rückwand 46 und dem Rahmen 16 und weisen jeweils ein Lager 54 auf. Die Seitenwände 46 sind gegenüber den Halmteilern 50 nach innen versetzt und zwar jeweils um ca. ein Sechstel der Breite der Mähvorrichtung 12. Diese Bemessung ist jedoch nicht zwingend und hängt insbesondere von der Breite der Mähvorrichtung 12 und der Mähgutbehandlungsvorrichtung 14 ab.

Die Rückwand 48 verbindet die Seitenwände 46 mit den Halmteilern 50, erstreckt sich senkrecht und quer zur Fahrtrichtung über die gesamte Breite der Mähvorrichtung 12 und weist eine Abgabeöffnung 56 auf. Die Breite der Abgabeöffnung 56 entspricht jedenfalls im wesentlichen dem Abstand zwischen den Seitenwänden 46. In einer nicht gezeigten Ausführung können an der Rückwand 48 zusätzlich Leitbleche und dergleichen vorgesehen werden, die auf das Förderverhalten des Mähguts Einfluß nehmen. Außerdem kann die Abgabeöffnung kleiner als der Abstand zwischen den Seitenwänden 46 ausgeführt werden.

Die Halmteiler 50 schließen die Mähvorrichtung 12 seitlich ab und erstrecken sich senkrecht von der Vorderkante der Mähvorrichtung 12 zu der Rückwand 48. Die Halmteiler 50 nehmen den Mähbalken 40 starr zwischen sich auf.

Die Decke 52 verbindet die Seitenwände 46, die Rückwand 48 und die Halmteiler 50 jeweils in deren oberen Bereich miteinander. In hiervon abweichenden Ausführungsbeispielen kann die Decke 52 auch bereits an der Mähgutbehandlungsvorrichtung 14 enden.

Die Seitenwände 46, die Rückwand 48, die Halmteiler 50 und die Decke 52 sind normalerweise aus Blech hergestellt, können jedoch auch Kunststoffschürzen für die flexible Bereiche aufweisen.

Die Mähgutbehandlungsvorrichtung 14 enthält ein Gehäuse 58, zwei Mähgutbehandlungswalzen 60 und eine Leitvorrichtung 62.

Die Mähgutbehandlungsvorrichtung 14 ist im Bereich der Mähgutbehandlungswalzen 60 wesentlich schmaler als die Mähvorrichtung 12, beträgt nur ungefähr die Hälfte deren Breite und ist ihr gegenüber um ca. ein Sechstel der Breite der Mähvorrichtung 12 quer zu der Fahrtrichtung verschiebbar.

Das Gehäuse 58 ist nach unten offen und weist im übrigen Seitenwände 64, eine Vorderwand 66 und eine Decke 68 auf, in deren umfaßten Raum die Mähgutbehandlungswalzen 60 untergebracht sind. Zwischen dem Gehäuse 58 und der Mähvorrichtung 12 ist ein Stellmotor 70 eingefügt, der als ein doppeltwirkender Hydraulikzylinder ausgebildet ist, von einer nicht gezeigten Betätigungsvorrichtung mit Druckmittel beaufschlagt wird und stellvertretend für ein irgendwie geartetes Betätigungsglied steht. Nach einer schematischen Darstellung greift der Stellmotor 70 einenends an einer Seitenwand 64 der Mähgutbearbeitungsvorrichtung 14 und anderenends an einem Halmteiler 50 der Mähvorrichtung 50 an. Abweichend hiervon kann der Stellmotor 70 auch an anderen Stellen angreifen, solange er in der Lage ist, die Mähgutbehandlungsvorrichtung 14 gegenüber der Mähvorrichtung 12 seitlich zu verstellen. Das Gehäuse 58 ist auf nicht näher gezeigte Weise horizontal gleitend mit der Mähvorrichtung 12 verbunden, z. B. mittels Schienen oder dergleichen, die sowohl das Gewicht der Mähgutbearbeitungsvorrichtung 14 aufnehmen, als auch stets für deren richtige Lage gegenüber der Mähvorrichtung 12 sorgen.

Die Seitenwände 64 des Gehäuses 58 entsprechen in ihrer Lage und Größe im wesentlichen denen der Mähvorrichtung 12. In ihrem rückwärtigen Endbereich sind die Seitenwände 64 mit einem Schwenklager 72 mit einer vertikalen Schwenkachse versehen und mit ihrem vorderen Ende sind sie mit der Vorderwand 66 verbunden. Die Seitenwände 64 und die Vorderwand 66 stehen unter einem rechten Winkel zueinander. Zwischen der in Vorwärtsfahrtrichtung gesehen linken Seitenwand 64 und der dazugehörigen Seitenwand 46 der Mähvorrichtung 12 bleibt ein Freiraum von ca. einem Sechstel der Breite der Mähvorrichtung 12, wenn sich die Mähgutbearbeitungsvorrichtung 14 in ihrer äußersten rechten Lage befindet.

Die Vorderwand 66 ist um ca. ein Sechstel schmäler als die Rückwand 48 der Mähvorrichtung 12 und weist ebenfalls eine Öffnung auf, durch die das Mähgut den Mähgutbehandlungswalzen 60 zugeführt werden kann.

Die Decke 68 verbindet die Seitenwände 64 und die Vorderwand 66 und trägt so zum Entstehen eines massiven Gehäuses 58 bei.

Die Mähgutbehandlungswalzen 60 sind gegensinnig antreibbar, profiliert, aus Kunststoff gebildet und kämmen miteinander; nur die obere ist gezeigt, während die untere vertikal verdeckt ist. Anstelle zweier Mähgutbehandlungswalzen 58 kann auch jede andere Art von Bearbeitungselementen, z. B. ein Schlegelrotor, eine Bürstenwalze und dergl. vorgesehen werden. Die Aufgabe der Mähgutbearbeitungsvorrichtung 14 besteht darin, das gemähte Gut so zu behandeln, daß es schneller trocknet und an der rückwärtigen Seite des Mähgeräts 10 in einem Schwad auf dem Boden abzulegen. Die Lage des Schwads ist von Bedeutung für die spätere Bearbeitung des Mähguts. Beispielsweise sollen zwei oder drei Schwade relativ dicht nebeneinander liegen, damit sie von einer einzigen Pick-up eines Feldhäckslers aufgenommen werden können. Hierzu ist es vorteilhaft, wenn bei einem ersten Schnitt ein Schwad rechts, beim zweiten Schnitt ein Schwad mittig und beim dritten Schnitt ein Schwad links abgelegt werden kann. Um dies zu erreichen, ist die Mähgutbearbeitungsvorrichtung 14 seitlich beweglich angeordnet. Jede Mähgutbehandlungswalze 60 enthält eine zentrische Welle 74, die zur ihrer Lagerung in den Seitenwänden 64 und zur Verbindung mit dem Antrieb 24 dient. Gemäß der Zeichnung ist der in Vorwärtsfahrtrichtung gesehen links liegende Endbereich der Welle 74 mit dem bewegbaren Wellenteil 38 in der Drehrichtung und axial fest verbunden. Der in Vorwärtsfahrtrichtung gesehen rechts liegende Endbereich der Welle 74 ist schlicht in der betreffenden Seitenwand 64 drehbar mittels nicht gezeigter Lager gehalten. Zwischen den Wellen 74 der beiden Mähgutbehandlungswalzen 60 befindet sich ein nicht gezeigtes Zugmittelgetriebe mit einer Kette, das für eine synchrone Rotation beider Mähgutbehandlungswalzen 60 sorgt.

Die Leitvorrichtung 62 enthält zwei Leitbleche 76, eine Abstandsstange 78 und einen Stellmotor 80. Die Aufgabe der Leitvorrichtung 62 besteht darin, das von den Mähgutbehandlungswalzen 60 abgegebene Mähgut zu einem Schwad zusammenzuführen, das schmaler ist als die Mähgutbehandlungswalzen 60. Zusätzlich kann dieses Schwad auch gegenüber oder innerhalb der Breite der Mähgutbehandlungswalzen 60 seitlich versetzt abgelegt werden.

Die Leitbleche 76 greifen mit ihren vorderen Endbereichen in den Schwenklagern 72 an den Seitenwänden 64 des Gehäuses 58 horizontal schwenkbar an und erstrecken sich eine beträchtliche Strecke über den rückwärtigen Endbereich des Mähgerätes 10. Das Mähgut streift teilweise an ihren inneren Oberflächen entlang.

Die Abstandsstange 78 ist gelenkig mit den Leitblechen 76 verbunden und bestimmt den Abstand zwischen diesen. Wenn das Ausführungsbeispiel auch eine längenunveränderliche Abstandsstange 78 zeigt, so könnte doch auch eine längenveränderliche benutzt werden. Die Abstandsstange 78 ist mit einem beliebig ausbildbaren Anschluß 82 für den Stellmotor 80 versehen.

Der Stellmotor 80 ist als Hydraulikmotor oder Elektromotor ausgebildet und dient dazu, die Leitbleche 76 gemeinsam gegenüber dem Gehäuse 58 zu verschwenken. Hierzu greift der Stellmotor 80 an seinem noch freien Ende an einem Träger 84 an, der selbst fest mit dem Gehäuse 58 verbunden ist. Der Stellmotor 80 kann gemeinsam mit oder getrennt von dem Stellmotor 70 von einer nicht gezeigten gesteuerten oder geregelten Betätigungsvorrichtung aus betätigt werden.

Nach alledem ergibt sich folgende Funktion.

Die Lage der Mähgutbearbeitungsvorrichtung 14 in bezug auf die Mähvorrichtung 12 wird von einer Bedienungsperson oder von Sensoren ermittelt, die z. B. den Abstand zu einem seitlichen Schwad feststellen. Am Anfang oder auch während des Mähvorgangs wird der Stellmotor 70 entsprechend den Vorstellungen der Bedienungsperson oder der vorgegebenen Steuerung bzw. Regelung betätigen.

Es wird angenommen, daß sich die Mähgutbearbeitungsvorrichtung 14 in der in der Figur gezeigten Lage befindet und in ihre gegenüberliegende Endstellung gebracht und das Schwad zudem so weit wie möglich in Vorwärtsfahrtrichtung gesehen nach links abgelegt werden soll.

Hierzu wird der Stellmotor 70 ausgefahren, wodurch sich die Gutbearbeitungsvorrichtung 14 insgesamt und mit der Leitvorrichtung 62 mit Blick auf die Zeichnung nach rechts bewegt. Während dieser Bewegung gleitet die Vorderwand 66 an der Rückwand 48 entlang und bleibt stets in Deckung mit dieser. Die beiden Wellenteile 37 und 38 der teleskopischen Welle 36 gleiten ebenfalls aufeinander und wahren somit ihre Antriebsverbindung. Infolge dieser Bewegung gelangt auch die Leitvorrichtung 62 nach rechts mit Blick auf die Zeichnung; allerdings verändert sich die Stellung der Leitbleche 76 nicht. Zum Erhöhen des seitlichen Versatzes wird nunmehr noch der Stellmotor 80 betätigt, nämlich eingefahren. Da der Träger 84 feststeht, wird die Abstandsstange 78 und werden mit ihr die Leitbleche 76 im Uhrzeigerdrehsinn geschwenkt, was zu einer Ablage des Schwads links mit Blick entlang der Vorwärtsfahrtrichtung führt.

## Patentansprüche

1. Mähgerät (10) mit einer Mähvorrichtung (12) und einer Mähgutbehandlungsvorrichtung (14), dadurch gekennzeichnet, daß die Mähgutbehandlungsvorrichtung (14) gegenüber der Mähvorrichtung (12) quer zu der Flußrichtung des Mähguts verstellbar ist.

2. Mähgerät nach Anspruch 1, dadurch gekennzeichnet, daß die Mähgutbehandlungsvorrichtung (14) eine geringere Aufnahmeweite aufweist als die Mähvorrichtung (12).

3. Mähgerät nach Anspruch 1 oder 2, dadurch gekennzeichnet, daß die Mähvorrichtung (12) in einem Gehäuse (42) mit einer eine Abgabeöffnung (56) aufweisenden Rückwand (48) und die Mähgutbehandlungsvorrichtung (14) in einem Gehäuse (58) mit einer eine Aufnahmeöffnung enthaltenden Vorderwand (66) aufgenommen ist, wobei sich die Vorderwand (66) und die Rückwand (48) teilweise überdecken.

4. Mähgerät nach einem oder mehreren der vorherigen Ansprüche, dadurch gekennzeichnet, daß die Mähgutbehandlungsvorrichtung (14) mittels einer teleskopischen Welle (36) antreibbar ist.

5. Mähgerät nach einem oder mehreren der vorherigen Ansprüche, dadurch gekennzeichnet, daß die Mähgutbehandlungsvorrichtung (14) mittels eines insbesondere hydraulischen und fernsteuerbaren Stellmotors (70) verstellbar ist.

6. Mähgerät nach einem oder mehreren der vorherigen Ansprüche, dadurch gekennzeichnet, daß ausgangsseitig der Mähgutbehandlungsvorrichtung (14) eine verstellbare Leitvorrichtung (62) für das Mähgut vorgesehen ist.

7. Mähgerät nach Anspruch 6, dadurch gekennzeichnet, daß die Leitvorrichtung (62) mittels eines zweiten Stellmotors (80) verstellbar ist.

8. Mähgerät nach einem oder mehreren der vorherigen Ansprüche, gekennzeichnet durch eine Steuer- oder Regelvorrichtung zur Beaufschlagung wenigstens eines Stellmotors (70, 80) abhängig von manuellen Eingaben oder Sensorsignalen.

9. Mähgerät nach einem oder mehreren der vorherigen Ansprüche, dadurch gekennzeichnet, daß die Mähvorrichtung (12) einen Mähbalken (40) mit mehreren Mähscheiben (44) enthält, deren Drehrichtung zur Mitte des Gutflusses ausgerichtet ist.

10. Mähgerät nach einem oder mehreren der vorherigen Ansprüche, dadurch gekennzeichnet, daß die Mähgutbearbeitungsvorrichtung (14) von der Mähvorrichtung (12) getragen ist.
